(19) Europäisches Patentamt
European Patent Office
Office européen des brevets

(11) Numéro de publication: **0 203 873 B1**

(12) **FASCICULE DE BREVET EUROPEEN**

(45) Date de publication du fascicule du brevet: **06.06.90**

(51) Int. Cl.$^5$: **C 01 F 7/06,** C 01 F 7/46

(21) Numéro de dépôt: **86420109.0**

(22) Date de dépôt: **28.04.86**

(54) **Production d'alumine à partir de bauxite à gibbsite à basse teneur en silice réactive.**

(30) Priorité: **30.04.85 FR 8506879**

(43) Date de publication de la demande:
**03.12.86 Bulletin 86/49**

(45) Mention de la délivrance du brevet:
**06.06.90 Bulletin 90/23**

(84) Etats contractants désignés:
**CH DE IT LI NL**

(56) Documents cités:
**DE-B-1 171 888**
**FR-A-1 506 516**
**FR-A-2 286 199**
**US-A-4 426 363**
**US-A-4 483 830**

**Le dossier contient des informations techniques présentées postérieurement au dépôt de la demande et ne figurant pas dans le présent fascicule.**

(73) Titulaire: **ALUMINIUM PECHINEY**
**23, rue Balzac**
**F-75008 Paris Cédex 08 (FR)**

(72) Inventeur: **Lepetit, Jean**
**Résidence Ste Victoire**
**F-13100 Aix en Provence (FR)**
Inventeur: **Mordini, Jacques**
**Parc Mozart 11, avenue Debussy**
**F-13100 Aix en Provence (FR)**

(74) Mandataire: **Pascaud, Claude et al**
**PECHINEY 28, rue de Bonnel**
**F-69433 Lyon Cédex 3 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

Domaine Technique

La présente invention concerne le traitement suivant le procédé Bayer de bauxite contenant de l'alumine sous forme principalement de gibbsite et moins de 2,5% en poids de silice réactive, c'est-à-dire de silice à l'état de silicate d'alumine ou de tout autre forme facilement soluble dans une liqueur d'aluminate de sodium telle qu'on la rencontre dans le procédé Bayer.

Etat de la Technique — Probleme à Resoudre

Le procédé Bayer largement décrit dans la littérature spécialisée constitue la technique essentielle de production de l'alumine destinée à être transformée en aluminium par électrolyse ignée.

Selon ce procédé, le minerai de bauxite est traité à chaud au moyen d'une solution aqueuse d'hydroxyde de sodium à concentration appropriée, provoquant ainsi la solubilisation de l'alumine et l'obtention d'une solution sursaturée d'aluminate de sodium.

Après séparation de la phase solide constituant le résidu inattaqué (boues rouges) du minerai, la solution sursaturée d'aluminate de sodium est ensemencée avec des particules de trihydrate d'alumine dans le but de provoquer la précipitation du trihydrate d'alumine. La liqueur d'aluminate de sodium appauvrie en alumine, dite liqueur décomposée, est recyclée à l'étape de l'attaque après avoir été concentrée et rechargée en hydroxyde de sodium pour constituer une liqueur, dite liqueur d'attaque, dont la concentration est appropriée à l'attaque du minerai.

Il est bien connu de l'homme de l'art que selon le degré d'hydratation et la structure minéralogique de l'alumine d'une part, la nature et la teneur des impuretés présentes dans la bauxite d'autre part, silice, oxydes de fer et titane en particulier, les conditions de traitement sont à adapter.

C'est ainsi que les bauxites contenant de l'alumine à l'état de monohydrate (Boehmite, diaspore) sont traitées encycle Bayer à des températures supérieures à 200°C, alors que les bauxites contenant de l'alumine à l'état de trihydrate comme la gibbsite sont traitées à des températures plus basses, généralement comprises entre 100 et 170°C. Dans ce dernier cas en effet, la gibbsite est facilement extraite de la bauxite au moyen de la liqueur d'aluminate de sodium (liqueur Bayer).

Les rendements d'extraction de l'alumine solubilisable correspondant à l'alumine à l'état de trihydrate dépassent légèrement 95%, si l'influence défavorable de certaines impuretés comme la silice est bien maitrisée.

En effet, la silice peut se présenter dans la bauxite sous plusieurs formes minéralogiques inégalement solubles dans l'hydroxyde de sodium. Certaines formes minéralogiques, dont le Kaolin ($Al_2O_3$, $2SiO_2$, $2H_2O$) est l'espèce la plus répandue, se solubilisent en même temps que la gibbsite contenue dans la bauxite.

On appelle communément "silice réactive" la part de la silice présente dans la bauxite sous l'une de ces formes, comptée en $SiO_2$. Elle représente généralement de 0,5 à 7% du poids de bauxite sèche. En présence d'une liqueur sodique, la silice réactive est d'abord solubilisée puis reprécipitée sous forme de silico-aluminate de sodium faiblement soluble.

La concentration en silice dans la liqueur sodique est déterminée par l'équilibre de solubilité du silico-aluminate de sodium au bout d'un temps très long. Lors du traitement industriel d'une bauxite à gibbsite, il est exceptionnel que l'équilibre de solubilité du silico-aluminate de sodium soit atteint. Généralement, la concentration en silice dans la liqueur sodique est supérieure, voire très supérieure à l'équilibre de solubilité du silico-aluminate de sodium. Cette concentration est liée, par conséquent, à la fois à l'équilibre de solubilité du silico-aluminate de sodium et à la cinétique de précipitation de ce dernier. Cette cinétique est d'autant plus lente que la bauxite contient moins de silice réactive, car la réaction de précipitation du silico-aluminate de sodium est favorisée par la présence du produit de la réaction.

Dans le cycle Bayer, la concentration en silice dans la liqueur enrichie en alumine au terme du traitement de la bauxite est un élément important car son niveau détermine celui de la liqueur d'attaque ainsi que celui de l'impureté silicium dans l'alumine produite. Il convient donc le plus souvent d'associer au processus d'extraction de l'alumine lors de l'attaque de la bauxite un processus dit de "dessilicatation" de la liqueur sodique visant à réduire la concentration en silice dans cette liqueur et donc le niveau de l'impureté silicium dans l'alumine produite.

Ce processus de dessilicatation est généralement réalisé durant l'attaque de la bauxite ou au cours d'une opération distincte précédant ou suivant l'attaque (brevets US 3413087 et 4426363).

Les procédés de dessilicatation ont en commun d'utiliser tout ou partie de la liqueur Bayer décomposée, à des concentrations de $Na_2O$ caustique comprises entre 100 et 300 g/litre et à des températures comprises entre 80°C et 200°C selon la nature de bauxite traitée. Ils permettent d'obtenir des performances de dessilicatation satisfaisantes avec des bauxites contenant plus de 2,5% de silice réactive dans la mesure où celle-ci est précipitée opportunément de manière à ne pas provoquer des dépôts intempestifs de tartre susceptible de perturber le fonctionnement des installations.

En revanche, l'application de l'art antérieur au traitement à basse et moyenne température des bauxites à gibbsite dont la teneur en silice réactive est pourtant inférieure à cette limite nécessite des temps très longs de mise en contact de la bauxite avec la liqueur sodique, conduisant à une immobilisation

prolongée des installations ainsi qu'à une diminution des rendements d'attaque du trihydrate d'alumine comme en témoignent les essais comparatifs suivants réalisés par la demanderesse.

Exemple 1

Attaque à basse température suivie d'une dessilicatation. Application à une bauxite à gibbsite de composition suivante exprimée en pourcentage du poids de bauxite sèche:

| | |
|---|---|
| $Al_2O_3$ % | 51,3 |
| $SiO_2$ total % | 3,8 |
| $SiO_2$ réactive % | 2,8 |

Attaque à 107°C durant 1h30' par une liqueur à 140 g $Na_2O$ caustique par litre et dans la proportion de 1 tonne de bauxite pour 6,5 $m^3$ de liqueur d'attaque. Dessilicatation après attaque pendant 6 heures à 104°C.

A ce stade:

Le rapport pondéral Rp concentration $Al_2O_3$/concentration $Na_2O$ caustiqueliqueur = 1,06 et le rapport de la concentration en silice dans la liqueur à la concentration en soude caustique est de 0,64%.

Ce rapport concentration $SiO_2$ liqueur/concentration $Na_2O$ caustique liqueur permet de caractériser au cours des différentes phases du cycle Bayer la teneur en silice soluble indepéndamment des variations de concentration en $Na_2O$ caustique de la liqueur exprimée en grammes par litre. Dans le cas présent, la teneur de 0.64% permet de garantir une teneur en silicium dans l'amunine produite inférieure à 100 ppm par rapport à $Al_2O_3$, norme supérieure généralement admise pour la fabrication de l'aluminium.

Exemple 2

Attaque et dessilicatation simultanées à moyenne température. Application à la même bauxite à gibbsite que l'Exemple 1.

Dans les mêmes proportions que l'Exemple 1, attaque et dessilicatation avec une liqueur à 150 g $Na_2O$ caustique/litre et à 145°C pendant 1h30'.

A ce stade: Rp = 1,21.

Le rapport de concentration en silice soluble par rapport à la concentration en $Na_2O$ caustique est de 0,62%.

Pour les exemples suivants, une bauxite à plus faible teneur en silice réactive a été utilisée. Dans ce cas, l'efficacité de la dessilicatation requiert des temps réactionnels beaucoup plus longs qui pèsent notamment sur l'investissement de l'atelier de dessilicatation.

Exemple 3

Attaque à basse température suivie d'une dessilicatation. Application à une bauxite de composition suivante:

| | |
|---|---|
| $Al_2O_3$ % | 47,5 |
| $SiO_2$ réactive % | 1,0 |

Attaque à 107°C durant 2 heures par une liqueur à 200 g $Na_2O$ caustique par litre et dans la proportion de 1 tonne de bauxite pour 6,5 $m^3$ de liqueur d'attaque. Dilution à 140 g $Na_2O$ caustique par litre et dessilicatation pendant 20 heures à 104°C.

A ce stade: Rp = 1,05.

Rapport de la concentration en silice soluble à la concentration en $Na_2O$ caustique: 0,63%. Dans le cas présent, par rapport à l'Exemple 1, à rendement et qualité matière identiques, la capacité installée doit être triplée pour assurer la même production.

Exemple 4

Attaque et dessilicatation simultanées à moyenne température. Application à la même bauxite que l'Exemple 3 avec les mêmes proportions bauxite/liqueur de la suspension.

Attaque et dessilicatation à 140°C par une liqueur à 150 g $Na_2O$ caustique/ litre pendant 3 heures.

A ce stade: Rp = 1,14

et le rapport de concentration silice soluble à $Na_2O$ caustique est 0,64%.

Par rapport à l'Exemple 2, la capacité installée doit être doublée pour assurer la même production et de surcroît on enregistre une réduction de la productivité de l'attaque puisque Rp passe de 1,21 à 1,14. Cette baisse est imputable à l'augmentation des temps de dessilicatation nécessitée par le faible taux de silice réactive.

Exemple 5

Dessilicatation basse température puis attaque moyenne température. Application à la même bauxite à gibbsite que les exemples 3 et 4.

— dessilicatation: mise en suspension de la bauxite à raison de 1 tonne pour 1,5 $m^3$ de liqueur à 150 g $Na_2O$ caustique par litre à 100°C pendant 6 heures.

— attaque avec même liqueur à 140°C pendant 20 minutes à raison de 4 $m^3$ par tonne de bauxite en suspension dans la liqueur dessilicatée.

A ce stade: Rp = 1,16

et rapport de concentration en silice à la concentration en $Na_2O$ caustique = 0,62%.

La demanderesse a donc pu constater qu'au cours des processus de dessilicatation à durée nécessairement prolongée pour permettre une épuration suffisante en silice encore solubilisée avant attaque de la gibbsite, outre le problème d'exploitation engendré par une immobilisation anormale des installations, une partie significative de la gibbsite est perdue lors de l'attaque.

Cette perte, qui dans le cas des exemples précédents représentait de l'ordre de 1,5 à 2% de l'alumine extractible à l'attaque, a été attribuée à la précipitation, appelée également rétrogradation, de monohydrate d'alumine non soluble dans les conditions d'attaque destinée à la seule solubilisation de la gibbsite, alors que dans le cas de dessilicatation réalisée avec des bauxites à teneur plus élevée en silice, le phénomène n'était pas apparu de manière significative sans doute du fait des durées raccourcies de dessilicatation.

La demanderesse s'est donc efforcée de mettre au point un procédé spécifique de traitement des bauxites à gibbsite, dont la teneur pondérale en silice réactive est inférieure à 2,5% qui ne présente pas les inconvénients précités et consécutifs à l'application des conditions de dessilicatation de l'art antérieur à ce type de bauxite.

Objet de L'Invention

L'invention est un procédé de production d'alumine selon le procédé Bayer à partir d'une bauxite contenant de l'alumine principalement sous forme de gibbsite et de la silice sous forme de silicate d'alumine à une teneur comptée en $SiO_2$ inférieure à 2,5% du poids de bauxite, comportant:

— en premier lieu, un circuit principal dans lequel une liqueur sodique dite d'attaque est enrichie en alumine par attaque de ladite bauxite à une température comprise généralement entre 100 et 170°C, puis séparée des résidus insolubles issus de 1,attaque, puis refroidie pour précipiter une partie de l'alumine qu'elle contient sous forme de trihydrate d'alumine en présence d'une amorce de trihydrate d'alumine, puis recyclée comme liqueur sodique d'attaque après séparation du trihydrate d'alumine précipité dit "de production" et de ladite amorce.

— en second lieu, des circuits annexes dans lesquels, en particulier, de l'eau est introduite pour laver séparément les résidus insolubles, la production et l'amorce en générant des eaux de lavage sodiques rejoignant ledit circuit principal.

— Enfin, des moyens d'évaporation destinés à compenser les diverses entrées d'eau caractérisé par les étapes suivantes:

a) la bauxite est mise en contact avec une liqueur sodique contenant une eau de lavage provenant d'une au moins des sources suivantes:

— lavage des résidus insolubles
— lavage du trihydrate d'alumine de production
— lavage du trihydrate d'alumine d'amorce.

Cette liqueur sodique, éventuellement additionnée de liqueur d'attaque, de concentration en soude comptée en $Na_2O$ caustique comprise entre 50 et 120 g/litre est mise en contact avec la bauxite à raison de moins de 2,5 $m^3$ de liqueur sodique et de préférence moins de 1,2 $m^3$ de liqueur sodique, par tonne de bauxite pour former une suspension qui subit un broyage.

b) Ladite suspension broyée est chauffée à une température comprise entre 80°C et 100°C pendant un temps n'excédant pas 6 heures pour transformer au moins 85% du silicate d'alumine de la bauxite en silico-aluminate de sodium insoluble.

c) La suspension issue de cette dernière phase de dessilicatation est enfin mise en contact avec la liqueur sodique d'attaque pendant un temps inférieur ou égal à 1 heure suffisant pour dissoudre, à la température d'attaque, au moins 90% du trihydrate contenu dans la bauxite.

Il a été constaté en effet que l'efficacité du procédé de dessilicatation avant attaque traduite en terme de diminution du rapport $SiO_2$ sol./$Na_2O$ caust. dans la liqueur passe par un maximum à une concentration en $Na_2O$ caustique de la liqueur mise en contact avec la bauxite, intermédiaire entre 50 et 120 g/litre.

Le Tableau I permet de juger de la perte d'efficacité du procédé aussi bien à faible concentration en $Na_2O$ caustique de la liqueur en raison de la cinétique plus lente de dissolution de la silice réactive qu'à

concentration élevée en $Na_2O$ caustique de la liqueur en raison de la cinétique plus lente de précipitation du silico-aluminate de sodium.

TABLEAU I : essais de dessilicatation à 100°C en présence de bauxite à 1% de silice réactive (Exemple 3) à raison de 1000 g de bauxite sèche par litre de liqueur sodique

| | Concentration liqueur sodique en $Na_2O$ g/litre | | | | | |
|---|---|---|---|---|---|---|
| | 44 | | 77 | | 150 | |
| Temps. Heures | $\%SiO_2/Na_2O$ | Taux % dissol. Kaolin | $\%SiO_2/Na_2O$ | Taux % dissol. Kaolin | $\%SiO_2/Na_2O$ | Taux % dissol. Kaolin |
| 1 | 0,96 | 25 | 0,78 | 60 | 1,76 | 79 |
| 2 | 0,79 | 45 | 0,47 | 87 | 0,92 | 96 |
| 4 | 0,55 | 70 | 0,30 | 98 | 0,66 | 100 |
| 6 | 0,41 | 81 | 0,28 | 100 | 0,55 | 100 |

Il a été constaté par ailleurs une perte de rendement d'extraction du trihydrate d'alumine par rétrogradation à l'état de monohydrate insoluble à la température d'attaque, lorsque la durée de dessilicatation de la suspension est supérieure à 4 heures et que la concentration en $Na_2O$ caustique de la liqueur sodique augmente comme l'indique le Tableau II ci-après:

TABLEAU II : Perte de rendement par rétrogradation durant une dessilicatation de 5 heures à 100°C.

| Concentration Liqueur $Na_2O$ g/l | 44 | 77 | 150 |
|---|---|---|---|
| Rp liqueur dessilicatée | 0,55 | 0,69 | 0,95 |
| Perte rendement % | non décelable | 0,7 | 1,5 |

Cherchant à optimiser d'autres paramètres tels que la température et la charge de bauxite mise en suspension dans un volume de liqueur fixe, la demanderesse a poursuivi son expérimentation et montré que les performances de la dessilicatation s'améliorent sensiblement au voisinage de 100°C ou quand la charge de bauxite est de l'ordre de 1 $T/m^3$ ou 1000 g/l comme l'indique le Tableau III ci-après:

TABLEAU III : Essais à différentes températures et charges de bauxite avec une liqueur à 77 g $Na_2O$/litre

| | 100°C | | 100°C | | 95°C | | 90°C | |
|---|---|---|---|---|---|---|---|---|
| | Baux./ Liq. | 1000g/l | Baux./ Liqu. | 650g/l | Baux./ Liqu. | 650g/l | Baux./ Liqu. | 1000g/l |
| t/H * | %SiO2 /Na2O | % diss. Kaolin | %SiO2 /Na2O | % diss. Kaolin | %SiO2 /Na2O | % diss. Kaolin | %SiO2 /Na2O | % diss. Kaolin |
| 1 | 0,78 | 60 | 1,42 | 62 | 2,02 | 51 | 1,1 | 40 |
| 2 | 0,47 | 87 | 0,90 | 85 | 1,30 | 75 | 0,84 | 64 |
| 4 | 0,30 | 98 | 0,39 | 99 | 0,60 | 93 | 0,52 | 85 |
| 6 | 0,28 | 100 | 0,29 | 100 | 0,46 | 99 | 0,36 | 96 |

* t/H = temps/Heure.

Enfin, le couplage du procédé de dessilicatation avec l'attaque ultérieure de la bauxite a conduit à fixer d'une part la fraction de silice réactive dissoute durant la dessilicatation à plus de 85% et de préférence à plus de 90% et d'autre part la concentration en silice dans la liqueur au terme de la dessilicatation à 0,9 fois au plus la concentration en silice souhaitée au terme de l'attaque. Dans ces conditions, la durée de l'attaque peut être réduite à la durée minimale requise pour obtenir une solubilisation d'au moins 95% de l'alumine extractible. Pour cela, la concentration en soude exprimée en $Na_2O$ caustique de la liqueur d'attaque doit être comprise entre 110 et 220 g/litre et la teneur en silice solubilisée dans ladite liqueur telle que le rapport pondéral $SiO_2$ soluble/$Na_2O$ caustique doit être compris entre 0,4% et 0,7%.

La liqueur d'attaque étant mise en contact avec la suspension dessilicatée à une température comprise entre 100°C et 170°C, l'on obtient en 1 heure et généralement moins de 1 heure la dissolution de 95% au moins du trihydrate d'alumine contenu dans la bauxite.

Il résulte de ces observations qu'indépendamment de la diminution significative du temps de dessilicatation des bauxites à gibbsite et à faible teneur en silice réactive, réalisée de façon économique par l'utilisation d'une partie des eaux de lavage comme liqueur sodique de dessilicatation, d'autres avantages découlent du procédé selon l'invention, notamment:

- la limitation des pertes de rendement par rétrogradation
- la diminution au cours du cycle Bayer des risques de précipitation importante de silico-aluminate de sodium et donc de formation de tartre
- la production d'une alumine à faible teneur en silicium (Si < 100 ppm).

Le procédé selon l'invention et sa mise en oeuvre seront mieux compris à partir de la description et des exemples d'application ci-après.

Description et Schema

La figure 1 représente schématiquement un procédé de traitement en cycle Bayer de bauxites à gibbsite et à faible taux de silice réactive selon l'invention.

La liqueur sodique A constituée par une fraction des eaux de lavage provenant soit du lavage des boues rouges A1 poste 6, soit du lavage du trihydroxyde d'aluminium de production A2 poste 11, soit du lavage de l'amorce A3 poste 13, soit d'un mélange d'au moins deux de ces eaux de lavage additionnées ou non d'une fraction B2 de la liqueur d'attaque B est affectée à la préparation de la suspension de bauxite broyée. Les eaux de lavage A1 et/ou A1 et/ou A3 ont subi éventuellement une concentration par évaporation poste 14 et/ou une épuration poste 15 pour éliminer les impuretés solubles indésirables telles que les carbonates et les substances organiques.

La liqueur sodique A est mélangée dans un broyeur au minerai de bauxite à gibbsite à raison de 0,5 à 1,2 $m^3$ de liqueur par tonne de bauxite pour donner une suspension S1. Après broyage poste 1, la suspension S1 est chauffée entre 80 et 100°C pour effectuer l'opération de dessilicatation poste 2. La suspension est maintenue à cette température pendant 2 à 6 heures pour assurer un taux de transformation d'au moins 85% de la silice réactive en silico-aluminate de sodium insoluble.

La solution dessilicatée S2 issue de cette opération est ensuite mise en contact, pour attaque poste 3, avec la fraction B1 de la liqueur Bayer décomposée B issue du poste 10 séparation et éventuellement concentrée par évaporation poste 14, pour ajustement des concentrations. Le mélange, effectué dans la proportion d'environ 5 $m^3$ de liqueur B1 par tonne de bauxite contenue dans la suspension S2 est chauffé entre 100 et 170°C pendant un temps suffisant pour extraire au moins 95% de la gibbsite contenue dans la bauxite.

La suspension S3 issue de cette opération est refroidie, puis diluée poste 4 avec fraction A4 complémentaire des eaux de lavage.

La suspension S4 issue de cette opération est ensuite décantée poste 5 pour fournir, d'une part la liqueur Bayer B enrichie en alumine qui après filtration poste 7 est décomposée postes 8,9 et 10 avant d'être recyclée, d'autre part les boues rouges dont les eaux de lavage A1 poste 6 sont recyclées de la même façon que A2 ou A3, soit comme liqueur de dessilicatation A, soit comme liqueur de dilution A4.

Exemples D'Application

Exemple 1

Bauxite à 47,5% $Al_2O_3$ sous forme de gibbsite et 1% $SiO_2$ réactive ($SiO_2/Al_2O_3 = 0{,}021$).

— dessilicatation: broyage d'une tonne de bauxite en présence de 1 $m^3$ de jus clair de ler laveur provenant du lavage des résidus inertes après attaque et contenant 70 g $Na_2O$ caustique par litre et 65 g $Al_2O_3$/litre. La suspension est chauffée à 100°C dans 3 bacs en série assurant la dessilicatation pendant 4 heures. La concentration en silice soluble en fin de dessilicatation est telle que $SiO_2$ sol/$Na_2O$ caust. = 0,3%.

— attaque pour extraction de l'alumine à gibbsite. La suspension après dessilicatation est mélangée avec 5,1 $m^3$ de liqueur contenant 200 g $Na_2O$ caustique par litre et 120 g $Al_2O_3$/litre. L'extraction de l'alumine est réalisée dans 3 bacs en série chauffés à 107°C assurant un temps de contact de 1 heure.

A ce stade: $Rp = 1{,}06$.

L'alumine est extraite avec un rendement de 97% et la rapport $SiO_2$ sol./$Na_2O$ caustique dans la liqueur

enrichie après attaque est de 0,57%, ce qui permet de garantir une teneur en silice de l'alumine produite inférieure à 100 ppm avec un faible entartrage des évaporateurs.

Résultats à comparer aux essais 1 et 3 décrits dans l'état de la technique.

Exemple 2

— même bauxite que l'Exemple 1 ci dessus.

— dessilicatation: broyage d'une tonne de bauxite en présence de 1 $m^3$ d'eau de lavage du trihydrate de production préalablement additionnée de liqueur d'attaque, contenant 76g de $Na_2O$ caustique par litre avec Rp = 0,57. La suspension est chauffée à 100°C dans 3 bacs en série assurant la dessilicatation pendant 4 heures. La concentration en silice soluble en fin de dessilicatation par rapport à $Na_2O$ caustique est de 0,3%.

— attaque pour extraction de l'alumine à gibbsite par mélange avec 4,95 $m^3$ de liqueur contenant 140 g $Na_2O$ caustique par litre et 77 g $Al_2O_3$ par litre à 140°C pendant 15 minutes.

A ce stade:

Rp = 1,16.

Le rendement d'extraction de l'alumine est de 97% et la concentration en silice soluble par rapport à $Na_2O$ caustique de la liqueur d'attaque enrichie est de 0,58%.

Ce résultant est également à comparer à l'essai n° 5 décrit dans l'état de la technique.

**Revendications**

1. Procédé de production d'alumine selon le procédé Bayer, à partir d'une bauxite contenant de l'alumine principalement sous forme de gibbsite et moins de 2,5% en poids de silice réactive généralement à l'état de silicate d'alumine comportant:

— en premier lieu, un circuit principal dans lequel une liqueur sodique dite d'attaque est enrichie en alumine par attaque de ladite bauxite à une température comprise généralement entre 100 et 170°C, puis séparée des résidus insolubles issus de l'attaque, puis refroidie pour précipiter une partie de l'alumine qu'elle contient sous forme de trihydrate d'alumine en présence d'une amorce de trihydrate d'alumine, puis recyclée comme liqueur sodique d'attaque après séparation du trihydrate d'alumine précipité dit "de production" et de ladite amorce

— en second lieu des circuits annexes dans lesquels, en particulier, de l'eau est introduite pour laver séparément les résidus insolubles, la production et l'amorce en générant des eaux de lavage sodiques rejoignant ledit circuit principal

— enfin des moyens d'évaporation destinés à compenser les diverses entrées d'eau caractérisé par les étapes suivantes:

a) La bauxite est mise en contact avec une liqueur sodique contenant une eau de lavage provenant d'une au moins des sources suivantes:

— lavage des résidus insolubles

— lavage du trihydrate d'alumine

— lavage du trihydrate d'alumine d'amorce.

Aprés éventuelle addition de liquer d'attaque, cette liquer sodique, de concentration en soude comptée en $Na_2O$ caustique comprise entre 50 et 120 g/litre est mise contact avec la bauxite pour former de moins de 2,5 $m^3$ de liqueur sodique par tonne de bauxite pour former une suspension qui subit un broyage.

b) Ladite suspension broyée est chauffée à une température comprise entre 80°C et 100°C pendant un temps n'excédant pas 6 heures pour transformer au moins 85% du silicate d'alumine de la bauxite en silico-aluminate de sodium insoluble.

c) La suspension issue de cette dernière phase dite de dessilicatation est enfin mise en contact avec la liqueur sodique d'attaque pendant un temps inferieur ou égal à 1 heure suffisant pour dissoudre, à la température d'attaque, au moins 90% du trihydrate contenu dans la bauxite.

2. Procédé selon la revendication 1 caractérisé en ce que le volume de liqueur sodique est de préférence inférieur à 1,2 $m^3$ par tonne de bauxite.

3. Procédé selon revendications 1 et 2, caractérisé en ce que la temperature du traitement de dessilicatation est voisine de 100°C.

4. Procédé selon revendications 1 à 3 caractérisé en ce que le taux de transformation du silicate d'alumine en silico-aluninate de sodium insoluble est supérieur àu 90% et la concentration en silice soluble dans la solution telle que le rapport pondéral $SiO_2$ soluble/$Na_2O$ soluble est inférieur à 0,9 fois ce même rapport dans la liqueur d'attaque.

5. Procédé selon revendication 1 caractérisé en ce que la liqueur d'attaque a une concentration en soude exprimée en $Na_2O$ caustique comprise entre 110 et 220 g/litre et une teneur en silice solubilisée dans la liqueur d'attaque, telle que le rapport pondéral $SiO_2$ soluble/$Na_2O$ caustique est compris entre 0,4% et 0,7%.

6. Procédé selon revendications 1 et 5, caractérisé en ce qu'après mise en contact de la suspension dessilicatée avec la liqueur sodique d'attaque la température est comprise entre 100°C et 170°C et le temps

de maintien inférieur à 2 heures à cette température, est suffisant pour dissoudre au moins 95% du trihydrate contenu dans la bauxite.

7. Procédé selon revendication 6, caractérisé en ce que le temps de maintien à la température d'attaque est inférieur ou égal à 15 minutes.

8. Procédé selon revendication 1, caractérisé en ce que la fraction des eaux de lavage prélevée dans le cycle Bayer et constituant tout ou partie de la liqueur sodique destinée à être mise en contact avec la bauxite, peut subir un traitement annexe consistant en des opérations de concentration et/ou d'épuration pour éliminer les impuretés solubles indésirables telles que le carbonate et les substances organiques.

**Patentansprüche**

1. Verfahren zur Herstellung von Aluminiumoxid nach de.m Bayer-Verfahren aus einem Bauxit, der Aluminiumoxid hauptsächlich in Form von Gibbsit und weniger als 2,5 Gew.% reaktives Siliziumoxid allgemein im Zustand von Aluminiumsilikat enthält, mit:
— an erster Stelle, einem Hauptkreis, in dem eine sogenannte "Aufschluß"-Natronlauge an Aluminiumoxid durch Aufschluß des Bauxits bei einer Temperatur von allgemein zwischen 100 und 170°C angereichert, dann von den vom Aufschluß stammenden unlöslichen Verunreinigungen getrennt, dann zur Ausfällung eines Teils des Aluminiumoxids, das sie enthält, in Form von Aluminiumoxidtrihydrat in Gegenwart eines Aluminiumoxidtrihydrat-Impfmittels abgekühlt, dann nach Abtrennung des ausgefällten, sogenannten "Erzeugnis"-Aluminiumoxidtrihydrats und des Impfmittels rückgeführt wird, an zweiter Stelle, Zusatzkreisen, in denen insbesondere Wasser zum getrennten Waschen der unlöslichen Rückstände, des Erzeugnisses und des Impfmittels unter Erzeugung von natronlaugehaltigen Waschwässern eingeführt wird, die mit dem Hauptkreis wieder vereint werden,
— schließlich Verdampfungsmitteln, die zur Kompensation der verschiedenen Wassereinlässe dienen,
gekennzeichnet durch die folgenden Stufen:

a) Der Bauxit wird in Kontakt mit einer Natronlauge gebracht, die ein von wenigstens einer der folgenden Quellen stammendes Waschwasser enthält:
— Waschung der unlöslichen Rückstände,
— Waschung des Aluminiumoxidtrihydrats,
— Waschung des Aluminiumoxidtrihydrat-Impfmittels.
Nach eventuellem Zusatz von Aufschlußlauge wird diese Natronlauge einer Konzentration an als austisches $Na_2O$ gerechnetem Natron zwischen 50 und 120 g/Liter in Kontakt mit dem Bauxit im Verhältnis von wenigstens 2,5 $m^3$ Natronlauge je t Bauxit gebracht, um eine Suspension zu bilden, die einer Feinzerkleinerung unterworfen wird.

b) Diese Suspension wird feinzerkleinert und auf eine Temperatur im Bereich von 80°C bis 100°C während einer 6 Stunden nicht übersteigenden Zeit erhitzt, um wenigstens 85% des Aluminiumsilikats des Bauxits in unlösliches Natriumsilicoaluminat umzuwandeln.

c) Die von diesem letzten, sogenannten "Entsilikatisierungs"schritt stammende Suspension wird schließlich in Kontakt mit der Aufschlußnatronlauge während einer Zeit unter oder gleich 1 Stunde gebracht, die ausreicht, um bei der Aufschlußtemperatur wenigstens 90% des im Bauxit enthaltenen Trihydrats aufzulösen.

2. Verfahren nach dem Anspruch 1, dadurch gekennzeichnet, daß das Volumen der Natronlauge vorzugsweise unter 1,2 $m^3$ je t Bauxit ist.

3. Verfahren nach Ansprüchen 1 und 2, dadurch gekennzeichnet, daß die Temperatur der Entsilikatisierungsbehandlung nahe 100°C ist.

4. Verfahren nach Ansprüchen 1 bis 3, dadurch gekennzeichnet, daß der Umwandlungsgrad des Aluminiumsilikats in unlösliches Natriumsilicoaluminat über 90% ist und die Konzentration an löslichem Siliziumdioxid in der Lösung derart ist, daß das Gewichtsverhältnis lösliches $SiO_2$/ lösliches $Na_2O$ unter dem 0,9-fachen des gleichen Verhältnisses in der Aufschlußlauge ist.

5. Verfahren nach dem Anspruch 1, dadurch gekennzeichnet, daß die Aufschlußlauge eine Konzentration an als kaustisches $Na_2O$ ausgedrücktem Natron im Bereich von 110 bis 220 g/Liter und einen Gehalt an gelöstem Siliziumdioxid in der Aufschlußlauge derart hat, daß das Gewichtsverhältnis lösliches $SiO_2$/ kaustisches $Na_2O$ im Bereich von 0,4% bis 0,7% ist.

6. Verfahren nach Ansprüchen 1 und 5, dadurch gekennzeichnet, daß nach Kontaktierung der entsilikatisierten Suspension mit der Aufschlußnatronlauge die Temperatur im Bereich von 100°C bis 170°C ist und die Haltezeit unter 2 Stunden bei dieser Temperatur ausreichend ist, um wenigstens 95% des im Bauxit enthaltenen Trihydrats aufzulösen.

7. Verfahren nach Anspruch 6, dadurch gekennzeichnet, daß die Haltezeit bei der Aufschlußtemperatur unter oder gleich 15 Minuten ist.

8. Verfahren nach Anspruch 1, dadurch gekennzeichnet, daß der Anteil der Waschwässer, der im Bayer-Zyklus entnommen wird und die Gesamtheit oder einen Teil der Natronlauge darstellt, die zur Kontaktierung mit dem Bauxit bestimmt ist, einer Zusatzbehandlung unterworfen werden kann, die aus Konzentrations- und/oder Reinigungsschritten besteht, um die unerwünschten löslichen Verunreinigungen, wie das Karbonat und die organischen Stoffe, zu entfernen.

## Claims

1. A process for the production of alumina using the Bayer process from a bauxite containing alumina principally in the form of gibbsite and less than 2.5% by weight of reactive silica generally in the form of aluminium silicate comprising:

— firstly, a principal circuit in which a sodium liquor referred to as the leaching liquor is enriched with alumina by leaching of said bauxite at a temperature which is generally betwen 100 and 170°C, then separated from the insoluble residues resulting from the leaching operation, then cooled to precipitate a part of the alumina that it contains in the form of aluminium trihydrate in the presence of an aluminium trihydrate initiator, then recycled as a sodium leaching liquor after separation of the precipitated aluminium trihydrate referred to as the 'production' and said initiator,

— secondly supplementary circuits in which in particular water is introduced for separately washing the insoluble residues, the production and the initiator, generating sodium-bearing washing waters which return to said principal circuit, and

— finally evaporation means intended to compensate for the various inputs of water, characterised by the following steps:

a) the bauxite is brought into contact with a sodium liquor containing a washing water, originating from one at least of the following sources:

— washing of the insoluble residues

— washing of the alumimium trihydrate

— washing of the initiator aluminium trihydrate.

After the possible addition of leaching liquor said sodium liquor, with a level of concentration of soda reckoned as caustic $Na_2O$ of between 50 and 120 g/litre is brought into contact with the bauxite in a proportion of less than 2.5 $m^3$ of sodium liquor per tonne of bauxite to form a suspension which is subjected to a crushing operation,

b) said crushed suspension is heated at a temperature of betweem 80°C and 100°C for a time which does not exceed 6 hours to transform at least 85% of the aluminium silicate of the bauxite into insoluble sodium silico-aluminate,

c) the suspension resulting from the last phase referred to as desilicatation is finally brought into contact with the sodium leaching liquor for a time which is less than or equal to 1 hour, being sufficient to dissolve at the leaching temperature at least 90% of the trihydrate contained in the bauxite.

2. A process according to claim 1 characterised in that the volume of sodium liquor is preferably less than 1.2 $m^3$ per tonne of bauxite.

3. A process according to claim 1 and 2 characterised in that the desilicatation treatment temperature is close to 100°C.

4. A process according to claim 1 to 3 characterised in that the degree of transformation of the aluminium silicate into insoluble sodium silico-aluminate is greater than 90% and the concentration of soluble silica in the solution is such that the soluble $SiO_2$/soluble $Na_2O$ weight ratio is lower than 0.9 times the same ratio in the leaching liquor.

5. A process according to claim 1 characterised in that the leaching liquor has a concentration of soda expressed in caustic $Na_2O$ of between 110 and 220 g/litre and a solubilised silica content in the leaching liquor such that the soluble $SiO_2$/caustic $Na_2O$ weight ratio is between 0.4% and 0.7%.

6. A process according to claim 1 and 5 characterised in that, after the desilicated suspension has been brought into contact with the sodium leaching liquor, the temperature is between 100°C and 170°C and the time for which that temperature is maintained, of less than 2 hours, is sufficient to dissolve at least 95% of the trihydrate contained in the bauxite.

7. A process according to claim 6 characterised in that the time for which the leaching temperature is maintained is less than or equal to 15 minutes.

8. A process according to claim 1 characterised in that the fraction of the washing waters which is taken off in the Bayer cycle and which constitutes all or part of the sodium liquor intended to be brought into contact with the bauxite may be subjected to a supplementary treatment consisting of concentration and/or purification operations for removing the undesirable soluble impurities such as organic substances and carbonate.

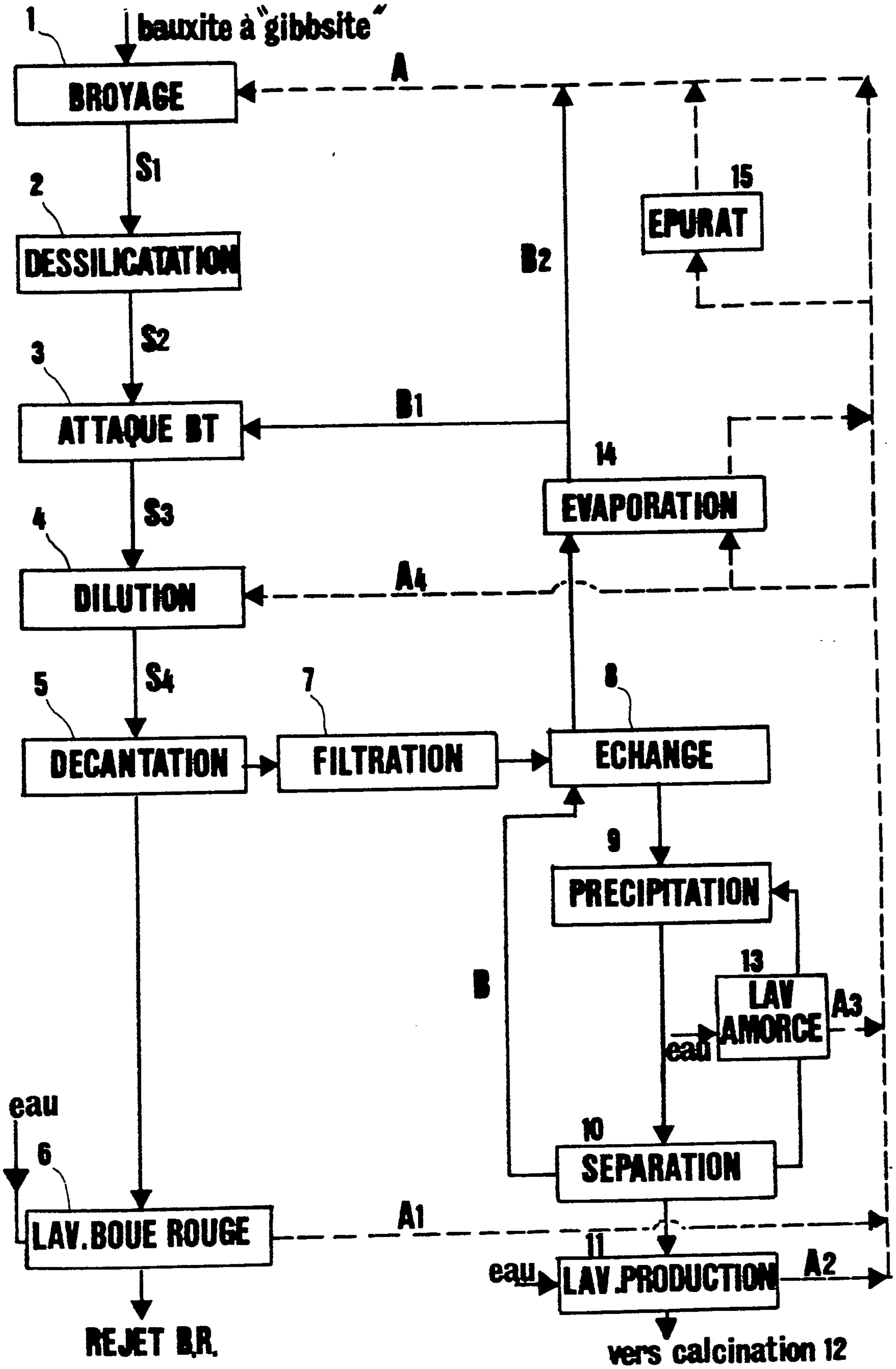
1
bauxite à "gibbsite"
BROYAGE
A
S1
2
DESSILICATATION
15
EPURAT
B2
S2
3
ATTAQUE BT
B1
14
EVAPORATION
S3
4
DILUTION
A4
S4
5
7
8
DECANTATION
FILTRATION
ECHANGE
9
PRECIPITATION
13
LAV AMORCE
A3
B
eau
eau
6
10
SEPARATION
LAV.BOUE ROUGE
A1
11
eau
LAV.PRODUCTION
A2
REJET B.R.
vers calcination 12